# EUROPÄISCHE PATENTSCHRIFT

(11) **EP 0 757 869 B1**
(45) Veröffentlichungstag und Bekanntmachung des Hinweises auf die Patenterteilung: **16.09.1998**
(21) Anmeldenummer: 95915798.3
(22) Anmeldetag: 18.04.1995
(51) Int. Cl.: H04M 3/50, H04M 11/04

(54) **VERFAHREN ZUM AKTIVIEREN EINER POSTFACHANZEIGE AN EINEM KOMMUNIKATIONSENDGERÄT**
PROCESS FOR ACTIVATING A MAILBOX MESSAGE NOTIFICATION IN A COMMUNICATIONS TERMINAL
PROCEDE PERMETTANT D'ACTIVER UNE SIGNALISATION DE MESSAGES EN BOITE POSTALE SUR UN APPAREIL EMETTEUR DE TELECOMMUNICATIONS

(30) Priorität: 29.04.1994 DE 4415168
(43) Veröffentlichungstag der Anmeldung: 12.02.1997
(73) Patentinhaber: SIEMENS AKTIENGESELLSCHAFT, 80333 München (DE)
(72) Erfinder: MAURER, Gerald, D-81245 München (DE)
(86) Internationale Anmeldenummer: DE9500534
(87) Internationale Veröffentlichungsnummer: WO9530299

(56) Entgegenhaltungen:
- EP-A- 0 588 101
- WO-A-87/07801
- WO-A-91/03118
- WO-A-92/22883
- DE-A- 4 124 711
- US-A- 5 195 126
- IBM TECHNICAL DISCLOSURE BULLETIN, Bd. 36, Nr. 6B, Juni 1993 NEW YORK US, Seiten 249-250, 'OPERATING SYSTEM TERMINATION VIA TELEPHONE CRITERIA REMINDER'

## Beschreibung

Die Erfindung betrifft ein Verfahren zum Aktivieren einer Postfachanzeige gemäß dem Oberbegriff des Patentanspruchs 1.

Es sind unterschiedliche Kommunikationssysteme bekannt, die neben der eigentlichen Vermittlungssteuerung auch zu einer Steuerung bzw. Realisierung zusätzlicher, über die eigentlichen Vermittlungsfunktionen hinausgehender Vorgänge befähigt sind. Solche zusätzlichen Funktionen werden im allgemeinen als Leistungsmerkmale bezeichnet, wobei hierbei insbesondere für den Kommunikationssdienst "Sprache" eine große Zahl unterschiedlicher Leistungsmerkmale bekannt ist.

Aus 'Sonderausgabe telcom report und Siemens-Magazin COM' "ISDN im Büro", Siemens Aktiengesellschaft, Berlin und München, 1985, insbesondere Seiten 76 bis 79, ist ein derartiges Kommunikationssystem bekannt, das eine Anrufbeantworterfunktion bzw. einen Sprachinformationsservice bietet.

Die Abwesenheit eines Teilnehmers führt im Falle eines Anrufes dazu, daß der Anruf an ein elektronisches Postfach umgelenkt wird. Der Anrufer erhält dann eine aufgezeichnete Nachricht des abwesenden angerufenen Teilnehmers und kann selbst eine Nachricht - im Rahmen des Sprachinformationsservice eine Sprachnachricht - in dem elektronischen Postfach hinterlassen.

Sobald eine Nachricht in einem Postfach hinterlegt ist, wird am Kommunikationsendgerät des angerufenen Teilnehmers eine Postfachanzeige, z.B. in Form einer Signallampe, aktiviert. Der angerufene Teilnehmer kann über sein Kommunikationsendgerät zu einem beliebigen Zeitpunkt die im Postfach gespeicherten Nachrichten abrufen.

In Ergänzung hierzu wurde auch schon eine Benachrichtigungsfunktion vorgeschlagen, die dazu dienen soll, die Postfachanzeige, analog zu einer Anrufumleitung, an durch ihre Anschlußrufnummer auswählbare andere Kommunikationsendgeräte weiterzuleiten.

Auf der US-A-5 195 126 ist ein Verfahren zum Ausgeben von in einem Postfach gespeicherten Nachrichten an ein Endgerät bekannt. An eine Steuerung des Postfachs wird eine Kennungsinformation, ausgehend vom anrufenden Teilnehmer übermittelt und mit der Postfachnummer des anrufenden Teilnehmers verglichen. Bei Übereinstimmung wird zu einem oder mehreren Endgeräten eine Verbindung aufgebaut und die in dem entsprechenden Postfach gespeicherte Nachricht an die Endgeräte übermittelt.

Der vorliegenden Erfindung liegt die Aufgabe zugrunde, für die Meldung von Ereignissen über ein Kommunikationssystem in diesem unterstützende Maßnahmen vorzusehen.

Gelöst wird diese Aufgabe ausgehend von den Merkmalen des Oberbegriffs erfindungsgemäß durch die im kennzeichnenden Teil des Patentanspruchs 1 angegebenen Merkmale.

Vorteilhafte Weiterbildungen des Verfahrens sind in den Unteransprüchen angegeben.

Ein Anruf bei einem bestimmten elektronischen Postfach, insbesondere Sprachpostfach, führt dazu, daß eine in dem Postfach bereits gespeicherte, abgehörte und dem Anrufer über seine Rufnummer zuordenbaren Nachricht als neu eingetroffen vermerkt wird und mit einem aktuellen "Zeitstempel" versehen wird. Der Postfachinhaber wird durch die aktivierte Postfachanzeige an seinem Kommunikationsendgerät von dem Eintreffen des Anrufs bzw. von dem Eintreffen eines Ereignisses in Kenntnis gesetzt.

Mit Hilfe einer im Kommunikationssystem implementierten Benachrichtigungsfunktion, bei der eine Postfachanzeige analog zu einer Anrufumleitung weitergeleitet wird, kann erreicht werden, daß der Postfachinhaber (durch Vorgabe von Zielrufnummern) an, von ihm frei zu wählenden Teilnehmeranschlüssen, d.h. Kommunikationsendgeräten, über die Tatsache eines eingegangenen Anrufs informiert wird.

Anrufer, denen keine im Postfach gespeicherte Nachricht zugeordnet werden kann, werden darauf hingewiesen, daß in diesem speziellen Postfach keine Nachrichtenaufnahme möglich ist. Damit ist gewährleistet, daß nur vom Postfachinhaber vorgesehene Ereignisse akzeptiert werden und eine Postfachanzeige auslösen.

Besonders geeignet ist das erfindungsgemäße Verfahren bzw. dessen Weiterbildungen, wenn beliebige Ereignisse, z.B. Maschinenausfälle, die einen Telefonanruf auslösen können (z.B. über Relais) automatisch detailliert an variable Ziele über das Kommunikationsnetz (insbesondere Telefonnetz), Personensucheinrichtungen oder Mobilfunkeinrichtungen gemeldet werden sollen.

Mit dem erfindungsgemäßen Verfahren läßt sich beispielsweise eine zentrale Überwachung von mehreren Maschinen durch eine Überwacherperson realisieren. Bei einem Maschinenausfall wird an dem der betreffenden Maschine zugeordneten Teilnehmeranschluß ein Verbindungsaufbau zu dem der Überwacherperson zugeordneten elektronischen Postfach veranlaßt. Im Zuge der Verbindungssignalisierung wird an das Postfach auch die Rufnummer des Teilnehmeranschlusses mitgeteilt, an dem der Anruf, also der Verbindungsaufbau veranlaßt wurde.

In diesem Postfach ist für jede zu überwachende Maschine jeweils eine Nachricht eingespeichert. Mit Hilfe der übermittelten Anschlußrufnummer wird diejenige Nachricht ausgewählt, die der ausgefallenen Maschine zugeordnet ist. Diese Nachricht wird als neu eingetroffen markiert und erhält einen aktuellen Zeitstempel. Außerdem wird die Postfachanzeige an dem Kommunikationsendgerät der Überwacherperson aktiviert.

Durch die aktivierte Postfachanzeige wird die Überwacherperson darüber informiert, daß eine der Maschinen ausgefallen ist. Durch Abruf der als neu eingetroffen markierten Nachrichten erhält er an seinem Kommunikationsendgerät die weiteren Informationen, welche der Maschinen von dem Ausfall betroffen ist und zu welchem Zeitpunkt dieser Ausfall vorgelegen hat. Sobald alle als neu vermerkten Nachrichten ausgegeben wurden, wird die Postfachanzeige wieder gelöscht.

## Patentansprüche

1. Verfahren zum Aktivieren einer Postfachanzeige an einem Kommunikationsendgerät eines Kommunikationssystems mit wenigstens einem elektronischen Postfach zur Speicherung von an dem Kommunikationsendgerät ausgebbaren Nachrichten, denen jeweils eine individuelle Identifikatorinformation zugeordnet ist,
**dadurch gekennzeichnet,** daß im Zuge eines Verbindungsaufbaus zu dem elektronischen Postfach an dessen Steuerung eine Kennungsinformation übermittelt wird, die von der Steuerung mit den individuellen Identifikatorinformationen der im elektronischen Postfach gespeicherten Nachrichten verglichen wird und daß nur bei Auffinden einer Übereinstimmung die Postfachanzeige aktiviert wird.

2. Verfahren nach Anspruch 1,
**dadurch gekennzeichnet,** daß bei fehlender Übereinstimmung der Kennungsinformation mit jeder der individuellen Identifikatorinformationen, von der Steuerung eine auf die Sperrung des elektronischen Postfachs gegen Nachrichtenaufnahme hinweisende Meldung zu dem den Verbindungsaufbau veranlassenden Teilnehmeranschluß übermittelt wird.

3. Verfahren nach Anspruch 1 oder 2,
**dadurch gekennzeichnet**, daß als Kennungsinformation die Anschlußrufnummer des den Verbindungsaufbau veranlassenden Teilnehmeranschlusses vorgesehen ist.

4. Verfahren nach einem der vorhergehenden Ansprüche,
**dadurch gekennzeichnet,** daß bei Auffinden einer Übereinstimmung die betreffende Nachricht als neu eingetroffen markiert wird.

5. Verfahren nach einem der vorhergehenden Ansprüche,
**dadurch gekennzeichnet,** daß bei Auffinden einer Übereinstimmung die betreffende Nachricht mit einer die aktuelle Tageszeit beinhaltenden Zeitinformation versehen wird.

6. Verfahren nach einem der vorhergehenden Ansprüche für ein Kommunikationssystem mit einer aktivierbaren Benachrichtigungsfunktion, die eine Postfachanzeige an Kommunikationsendgeräten von durch Anschlußrufnummern auswählbaren Teilnehmeranschlüssen vorsieht.

## Claims

1. Process for activating a mailbox message notification at a communications terminal of a communications system having at least one electronic mailbox for storing messages which can be issued at the communications terminal and to which in each case an item of individual identifier information is assigned, characterized in that, in the course of a connection set-up to the electronic mailbox, an item of identification information is transmitted to the controller of the said electronic mailbox, which identification information is compared by the controller with the individual items of identifier information of the messages stored in the electronic mailbox, and in that the mailbox message notification is activated only when correspondence occurs.

2. Process according to Claim 1, characterized in that when there is a lack of correspondence of the identification information with each of the individual items of identifier information, a message which indicates that the electronic mailbox has been disabled from receiving messages is transmitted from the controller to the subscriber extension which brings about the connection set-up.

3. Process according to Claim 1 or 2, characterized in that the extension call number of the subscriber extension which brings about the connection set-up is provided as identification information.

4. Process according to one of the preceding claims, characterized in that, when correspondence occurs, the respective message is marked as newly arrived.

5. Process according to one of the preceding claims, characterized in that, when correspondence occurs, the respective message is provided with an item of time information which includes the present time of day.

6. Process according to one of the preceding claims for a communications system having an activatable notification function which provides a mailbox message notification at communications terminals of subscriber extensions which can be selected by extension call numbers.

## Revendications

1. Procédé pour activer une indication de présence de messages dans une boîte postale sur un terminal de communication d'un système de communication comportant au moins une boîte postale électronique pour enregistrer des messages qui peuvent être sortis sur le terminal de communication et à chacun desquels est associée une information d'identification individuelle, caractérisé en ce que, à la suite d'un établissement de liaison avec la boîte postale électronique, il est transmis à sa commande une information de caractérisation qui est comparée par la commande aux informations d'identification individuelles des messages enregistrés dans la boîte postale électronique et en ce que l'indication de la présence de messages dans la boîte postale n'est activée qu'en cas de coïncidence trouvée.

2. Procédé suivant la revendication 1, caractérisé en ce que, dans le cas où il n'y a pas coïncidence de l'information de caractérisation avec chacune des informations d'identification individuelle, il est transmis, par la commande aux raccordements d'abonnés provoquant l'établissement de liaison, un message indiquant le blocage de la boîte postale électronique pour la réception de messages.

3. Procédé suivant la revendication 1 ou 2, caractérisé en ce qu'il est prévu comme information de caractérisation le numéro d'appel du raccordement d'abonné provoquant l'établissement de liaison.

4. Procédé suivant l'une des revendications précédentes, caractérisé en ce que, en cas d'une coïncidence trouvée, le message concerné est marqué comme nouvellement arrivé.

5. Procédé suivant l'une des revendications précédentes, caractérisé en ce que, en cas d'une coïncidence trouvée, le message concerné est muni d'une information de temps concernant l'heure du jour du moment.

6. Procédé suivant l'une des revendications précédentes, pour un système de communication ayant une fonction d'avertissement qui peut être activé et qui prévoit une indication de la présence de messages dans une boîte postale sur des terminaux de communication par des raccordements d'abonnés pouvant être sélectionnés par des numéros d'appels.
